# DEMANDE DE BREVET EUROPEEN

(11) **EP 4 752 776 A1**
(43) Date de publication de la demande: **03.06.2026**
(21) Numéro de dépôt: 25216806.7
(22) Date de dépôt: 19.11.2025
(51) Int. Cl.: G06F 21/75, G06F 21/81, G06K 19/073

(54) **DISPOSITIF ELECTRONIQUE**

(30) Priorité: 02.12.2024 FR 2413310
(71) Demandeur: STMicroelectronics International N.V., 1228 Plan-les-Ouates, Geneva (CH)
(72) Inventeur: SARAFIANOS, Alexandre, 83910 POURRIERES (FR); BOTTARO, Henri, 13320 BOUC BEL AIR (FR); SOUDE, Thierry, 13114 PUYLOUBIER (FR); TEIB, Malek, 13590 MEYREUIL (FR)
(74) Mandataire: Cabinet Beaumont

(57) **Abrégé**

La présente description concerne un dispositif électronique (14) comprenant une première source (22) d'un courant aléatoire (IA) reliée entre l'alimentation (16) et la masse (18) du dispositif.

## Description

### Domaine technique

La présente description concerne de façon générale les dispositifs électroniques et plus précisément les dispositifs protégés contre des attaques.

### Technique antérieure

Les dispositifs électroniques utilisent régulièrement des données cryptées, cachées ou de manière générale des données que le fabriquant ou l'utilisateur souhaite conserver secrètes de personnes extérieures. Il existe un grand nombre de méthodes pouvant être utilisées par de telles personnes extérieures, attaquant ou pirates. Ces méthodes peuvent être non invasives, par exemple des attaques par canal auxiliaire (side-channel attacks), invasives, ou semi-invasives, par exemple des attaques par injections de fautes.

Il existe un besoin de protéger des dispositifs électroniques contre ces méthodes.

### Résumé de l'invention

Un mode de réalisation prévoit un dispositif électronique comprenant une première source d'un courant aléatoire reliée entre l'alimentation et la masse du dispositif.

Un autre mode de réalisation prévoit un procédé de commande d'un dispositif électronique comprenant l'application d'un courant aléatoire par une première source de courant entre l'alimentation et la masse du dispositif.

Selon un mode de réalisation, la première source du courant aléatoire est connectée à la masse.

Selon un mode de réalisation, la première source est une source de courant variable commandée par un signal de commande obtenu à partir d'au moins un nombre aléatoire.

Selon un mode de réalisation, le signal de commande est configuré pour assurer que le courant aléatoire prend une succession de valeurs aléatoires.

Selon un mode de réalisation, chaque valeur aléatoire est maintenue pendant une durée aléatoire.

Selon un mode de réalisation, les valeurs aléatoires sont chacune égale à la multiplication d'un premier nombre aléatoire et d'un premier pas, les durées aléatoires étant chacune égale à la multiplication d'un deuxième nombre aléatoire et d'un deuxième pas.

Selon un mode de réalisation, le dispositif comprend un générateur de valeurs aléatoires configuré pour générer les premières et deuxièmes nombres aléatoires.

Selon un mode de réalisation, les durées de maintien des valeurs aléatoires du courant sont comprises dans une première gamme paramétrable.

Selon un mode de réalisation, les valeurs aléatoires du courant aléatoire sont comprises dans une deuxième gamme paramétrable.

Selon un mode de réalisation, la première source du courant aléatoire comprend une première branche entre l'alimentation et la masse du dispositif, la première branche comprenant un premier interrupteur commandé par un signal d'activation, un premier transistor et une deuxième source d'un deuxième courant et au moins deux deuxièmes branches entre l'alimentation et la masse du dispositif, chaque deuxième branche comprenant un deuxième interrupteur et un deuxième transistor couplé en miroir de courant avec le premier transistor, chaque deuxième interrupteur étant commandé par une partie du signal de commande.

Selon un mode de réalisation, le deuxième courant est égal au premier pas.

Selon un mode de réalisation, la source de courant comprend une première branche entre l'alimentation et la masse du dispositif, la première branche comprenant un premier interrupteur commandé par un signal d'activation et une première résistance ; et au moins deux deuxièmes branches entre l'alimentation et la masse du dispositif, chaque deuxième branche comprenant un deuxième interrupteur et une deuxième résistance, chaque deuxième interrupteur étant commandé par une partie du signal de commande.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre un type d'attaque de dispositif électronique ;
la figure 2 représente un mode de réalisation d'un dispositif électronique protégé contre des attaques ;
la figure 3 illustre le fonctionnement du dispositif de la figure 2 ;
la figure 4 représente plus en détail une implémentation du dispositif de la figure 2 ;
la figure 5 illustre le fonctionnement du dispositif de la figure 4 ; et
la figure 6 représente des exemples d'implémentation d'une partie du dispositif de la figure 4.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

Le dispositif est par exemple destiné à toute application comprenant des circuits sécurisés.

Le dispositif est par exemple destiné à l'industrie automobile. L'électrification des véhicules automobiles génère un niveau élevé et croissant de contenu électronique dans les véhicules. L'automatisation de la conduite génère également un niveau élevé et croissant de contenu électronique dans les véhicules. Le dispositif comprend par exemple des diodes de suppression de tension transitoire haute tension, et des filtres de mode commun pour protéger contre les risques électriques dans l'électronique complexe émergente.

Le dispositif peut par exemple être utilisé dans le domaine industriel. Plus particulièrement, le dispositif vise par exemple à être utilisé pour le développement des énergies vertes ou pour l'électrification d'infrastructures, par exemple pour des bornes de recharge ou pour l'incorporation d'énergie solaire. L'appareil peut également être utilisé dans le domaine de l'Internet des objets et de la maison intelligente. Le dispositif est par exemple destiné à être mis en œuvre dans les circuits de puissance et d'énergie. L'appareil peut également être utilisé dans la mise en œuvre de cloud, de réseaux 5G, de centres de données et de serveurs. Le dispositif comprend par exemple des matériaux à large bande interdite.

Le dispositif est par exemple destiné à être utilisé dans l'électronique personnelle, par exemple dans le but d'augmenter le contenu radiofréquence, dans les appareils de connexions 5G ou plus généralement dans les appareils connectés. L'appareil est par exemple un smartphone ou une partie d'un réseau Internet des objets. L'appareil est par exemple connecté en 5G, en WIFI ou en bande ultra-blanche. Le dispositif comprend par exemple des interfaces haut débit, avec par exemple un filtrage avancé et une protection contre les décharges électromagnétiques.

Le dispositif est par exemple destiné à être utilisé dans des équipements de communication, ou dans des ordinateurs et périphériques. Par exemple, l'appareil peut être utilisé dans une infrastructure 5G et des centres de données dédiés. Le dispositif peut également être utilisé dans des satellites, comprenant par exemple des dispositifs passifs intégrés pour des applications radiofréquence.

Le dispositif divulgué est par exemple utilisé dans les applications telles que les communications par satellite, les systèmes radar et les amplificateurs micro-ondes. Le dispositif divulgué peut également être utilisé dans certains appareils électroniques personnels spécialisés tels que les amplificateurs audio haut de gamme ou les émetteurs radiofréquence (RF).

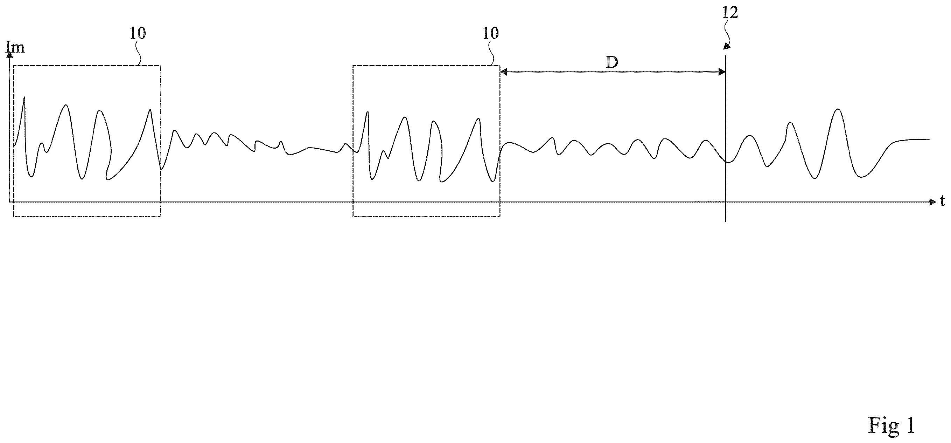

La figure 1 illustre un type d'attaque de dispositif électronique. Plus précisément, la figure 1 représente le courant de masse Im d'un dispositif électronique, par exemple d'une puce électronique, en fonction du temps t. Par courant de masse, on entend le courant mesuré au niveau de la masse du dispositif.

Lors du fonctionnement du dispositif électronique, les variations du courant de masse peuvent former des schémas reconnaissables. En particulier, des schémas de variation du courant de masse peuvent apparaitre périodiquement ou lors d'évènements spécifiques du fonctionnement du dispositif électronique. De tels schémas 10 sont représentés en figure 1, entourés par un cadre en trait pointillés. De tels schémas apparaissent par exemple lors d'étapes correspondant à une forte consommation électrique, par exemple une étape de cryptage, de lecture de mémoires ou d'émission de données.

Lors de certaines attaques contre le dispositif, l'attaquant cherche à reconnaitre de tels schémas 10. Une fois le schéma à reconnaitre déterminé, l'attaquant peut attendre l'apparition dudit schéma et, après un délai D, effectuer une attaque 12. L'attaque 12 est par exemple une attaque de type injection de faute ou de type attaque par canal auxiliaire. L'attaque est par exemple effectuée de manière systématique à chaque apparition du schéma 10.

Un tel procédé permet d'obtenir des informations sur le fonctionnement du dispositif, et en particulier sur la consommation du dispositif.

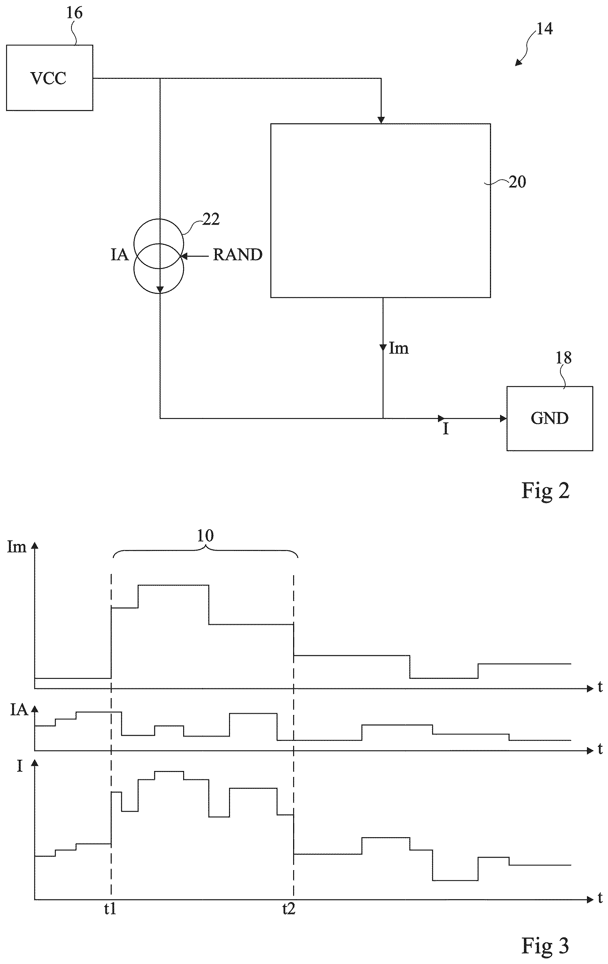

La figure 2 représente un mode de réalisation d'un dispositif électronique 14 protégé contre des attaques. Plus précisément, le dispositif 14 est configuré pour pouvoir mettre en œuvre une contremesure contre les attaques telles que décrites en relation avec la figure 1.

Le dispositif 14 est par exemple une puce électronique. Le dispositif 14 comprend une alimentation 16 et une masse 18.

L'alimentation 16 correspond par exemple à une source de tension d'alimentation VCC. La source d'alimentation 16 génère alors la tension VCC à partir d'un élément de stockage d'énergie, par exemple une batterie, compris dans le dispositif 14. Alternativement, l'alimentation 16 peut correspondre à une broche d'entrée/sortie reliée, de préférence connectée, à une source d'alimentation externe au dispositif 14.

Similairement, la masse 18 peut être une masse (GND) interne au dispositif 14. Alternativement, la masse 18 peut correspondre à une broche d'entrée/sortie reliée, de préférence connectée, à une masse externe au dispositif 14.

Le dispositif 14 comprend un ensemble 20. L'ensemble 20 comprend aux éléments permettant la mise en œuvre du fonctionnement de la puce. L'ensemble 20 comprend par exemple des composants électroniques. L'ensemble 20 comprend par exemple une ou plusieurs régions mémoire. L'ensemble 20 comprend par exemple au moins une région mémoire sécurisée. L'ensemble 20 comprend par exemple un circuit logique. L'ensemble 20 comprend par exemple un circuit d'alimentation, comprenant par exemple au moins régulateur de tension. L'ensemble 20 comprend par exemple un processeur. L'ensemble 20 génère un courant Im, correspondant au courant de masse décrit en relation avec la figure 1. L'ensemble 20 comprend de préférence au moins un générateur de nombres aléatoires. L'ensemble 20 génère le courant Im décrit en relation avec la figure 1.

Le dispositif 14 comprend en outre une source 22 d'un courant aléatoire IA. Par courant aléatoire, on entend un courant dont la valeur en Ampère prend des valeurs aléatoires, par exemple pendant des durées aléatoires. Par exemple, le courant IA prend des valeurs aléatoires comprises entre 2 mA et 9 mA. Par exemple, le courant IA prend une nouvelle valeur aléatoire au moins toutes les 50 ns secondes. De préférence, la source de courant 22 est une source de courant variable commandé par un signal de commande aléatoire RAND. De préférence, le signal RAND est généré par l'ensemble 20, de préférence sur la base d'un générateur de nombres aléatoires. La source 22 est reliée entre l'alimentation 16 et la masse 18. La source 22 comprend de préférence une borne reliée, de préférence connectée, à l'alimentation 16 et une borne reliée, de préférence connectée, à la masse 18.

Ainsi, le courant IA, généré par la source 22, est additionné au courant Im généré par l'ensemble 20. Le courant I, mesuré au niveau de la masse, correspond à la somme du courant Im et du courant IA. Lors d'une attaque telle que celle décrite en relation avec la figure 1, l'attaquant mesurera ainsi le courant I.

De préférence, le courant IA n'est pas utilisé dans le fonctionnement du dispositif 14, autrement que dans la modification du courant de masse. Ainsi, le courant IA ne commande pas de composant et n'alimente pas de composants. De préférence, le courant IA n'est utilisé que pour ajouter du bruit sur le courant de masse.

La figure 3 illustre le fonctionnement du dispositif de la figure 2. Plus précisément, la figure 3 représente un exemple de variations des courants Im, IA et I du dispositif de la figure 2 en fonction du temps. La figure 3 illustre ainsi la mise en œuvre de la contremesure.

Au moins une partie des variations du courant Im représentée en figure 3 peut correspondre par exemple aux schémas 10 de la figure 1 qu'un attaquant pourrait chercher à reconnaitre. Par exemple, les variations situées entre des instants t1 et t2 correspondent par exemple aux schémas 10 de la figure 1.

Le courant IA est un courant aléatoire. Ainsi, les valeurs du courant IA ne peuvent être prévues par l'attaquant. En outre, les valeurs du courant IA lors des différentes itérations du schéma 10 sont différentes.

Le courant I est la somme des courants Im et IA. Ainsi, il n'est pas possible de reconnaitre le schéma 10 en mesurant le courant I. De plus, le courant IA prenant des valeurs différentes lors des différentes itérations du schéma 10, il n'est pas possible de repérer l'existence des schémas 10 modifiés répétés.

Un attaquant ne peut ainsi pas déterminer quand implémenter son attaque durant le fonctionnement du dispositif 14.

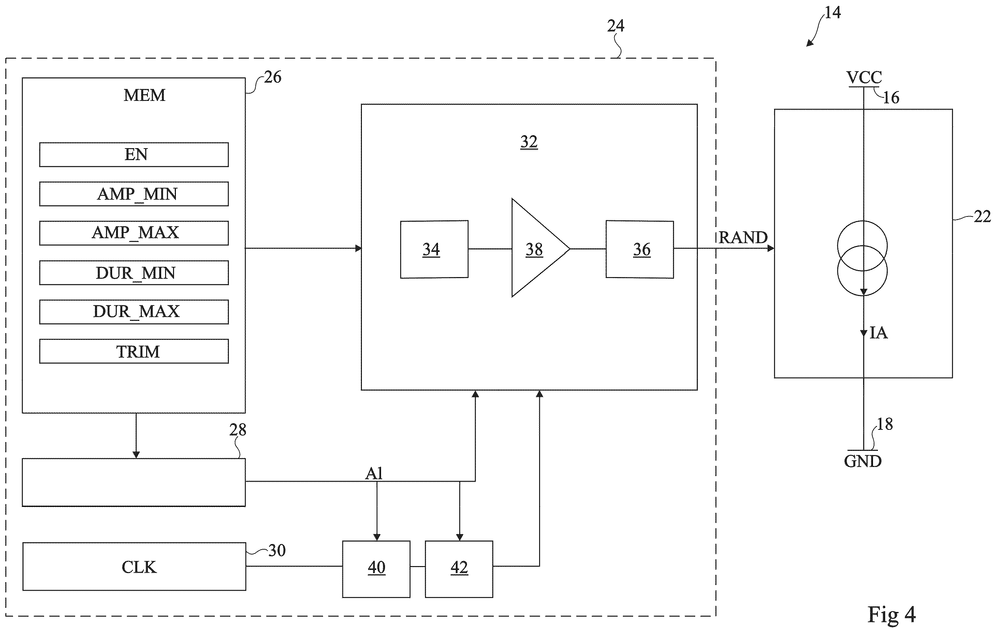

La figure 4 représente plus en détail une implémentation du dispositif 14 de la figure 2.

Le dispositif 14 comprend, comme en figure 2, la source de courant 22. Comme en figure 2, la source 22 est reliée entre l'alimentation 16 et la masse 18. La source 22 comprend une borne reliée, de préférence connectée, à l'alimentation 16 et une borne reliée, de préférence connectée, à la masse 18.

Le dispositif 14 comprend en outre un circuit 24 de commande de la source 22. Le circuit 24 est par exemple compris dans l'ensemble 20. Le circuit 24 génère ainsi le signal RAND commandant la source de courant 22 de telle manière que le courant IA généré par la source 22 soit aléatoire, tel que décrit en relation avec la figure 2. Le signal RAND correspond par exemple à plusieurs signaux, par exemple plusieurs tensions de commande.

Le circuit 24 comprend une région de mémoire ou un banc de registre 26 (MEM). La région 26 est configuré pour contenir des paramètres de génération du signal aléatoire. Ces paramètres sont par exemple modifiables par le fabricant et/ou par l'utilisateur. La région 26 est par exemple une région mémoire sécurisée.

La région 26 comprend par exemple une donnée EN d'activation de la contremesure. La donnée peut par exemple prendre une première valeur activant la génération de la commande variable RAND et une deuxième valeur désactivant la génération de la commande variable RAND. Alternativement, la donnée peut par exemple prendre une première valeur activant le passage du courant IA vers la masse et une deuxième valeur désactivant le passage du courant IA vers la masse. L'utilisateur peut ainsi choisir de mettre en œuvre la contremesure contre les attaques décrite en relation avec la figure 1, ou ne pas la mettre en œuvre.

La région 26 comprend par exemple une donnée AMP_MIN, représentative de la valeur minimale du courant IA, et une donnée AMP_MAX, représentative de la valeur maximale du courant IA. Ainsi, l'utilisateur peut choisir la gamme de valeur parmi laquelle les valeurs du courant aléatoire IA peuvent être prises. Chaque valeur est maintenue pendant une durée, par exemple une durée aléatoire.

La région 26 comprend par exemple une donnée DUR_MIN, représentative de la valeur minimale de la durée durant laquelle les valeurs du courant IA sont maintenues, et une donnée DUR_MAX, représentative de la valeur maximale de la durée durant laquelle les valeurs du courant IA sont maintenues. Ainsi, l'utilisateur peut choisir la gamme de valeur parmi laquelle les durées de maintien des valeurs du courant IA peuvent être prises.

La région 26 comprend par exemple une donnée TRIM. La donnée TRIM correspond à la valeur du bit qui permet de régler la source de courant au plus près de la valeur cible. Ce bit est obtenu lors du test des plaques semiconductrices. Cette valeur est stockée en mémoire et elle est chargée à chaque démarrage du dispositif.

Le circuit 24 comprend un générateur 28 de nombres aléatoires Al. Le générateur 28 est par exemple configuré pour générer au moins deux nombres aléatoires distincts simultanément. Le générateur 28 est par exemple configuré pour générer une valeur aléatoire comprise entre les valeurs des paramètres AMP_MIN et AMP_MAX et une valeur aléatoire comprise entre les valeurs des paramètres DUR_MIN et DUR_MAX.

Le générateur 28 est par exemple entièrement compris dans le dispositif 14. Des nombres aléatoires Al sont alors par exemple générés dans le dispositif 14 par des composants électroniques du circuit 24. Alternativement, le générateur 28 est par exemple une broche d'entrée/sortie reliée, de préférence connectée, à un générateur de nombres aléatoires externe au dispositif 14.

Le circuit 24 comprend un circuit de génération d'horloge 30, configurée pour générer un signal d'horloge CLK. Le circuit 30 est par exemple une broche d'entrée/sortie reliée, de préférence connectée, à une source de signal d'horloge externe au dispositif 14.

Le circuit 24 comprend un bloc de commande 32. Le bloc de commande 32 est configuré pour générer le signal RAND à partir des données de la région mémoire 26, de nombres aléatoires et du signal d'horloge. Le bloc 32 est donc configuré pour générer le signal RAND de telle manière que la source de courant variable 22 puisse, à partir de ce signal RAND, générer le courant de valeur aléatoire IA. Le bloc 32 comprend par exemple un processeur. Le bloc 32 comprend au moins une partie numérique 34. Le bloc 32 comprend par exemple une portion analogique 36. Les parties numériques 34 et analogique 36 sont par exemple reliées par un convertisseur de niveau (level shifter) 38.

Le bloc 32 est par exemple aussi configuré pour transmettre les données EN et TRIM à la source 22 et éventuellement les convertir.

Selon un mode de réalisation, le bloc 32 peut par exemple comprendre un générateur de retard aléatoire 40 et un diviseur de fréquence aléatoire 42. Le circuit 30 est par exemple relié au bloc 32 par le générateur 40 et le diviseur 42, le générateur 40 et le diviseur 42 étant de préférence reliés en série. Le retard généré par le générateur 40 sur le signal d'horloge est de préférence aléatoire et dépend d'un nombre aléatoire généré par le générateur 28, de préférence distinct des nombres générés pour la valeur du courant et pour la durée de maintien de la valeur. De même, la valeur de la division de fréquence du diviseur 42 est de préférence aléatoire et dépend d'un nombre aléatoire généré par le générateur 28, de préférence distinct des nombres générés pour la valeur du courant et pour la durée de maintien de la valeur.

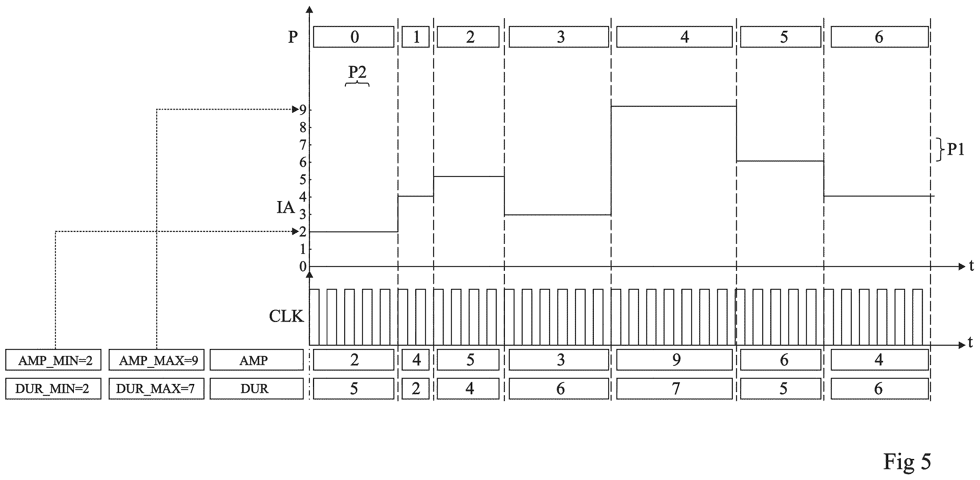

La figure 5 illustre le fonctionnement du dispositif de la figure 4. Plus précisément, la figure 5 illustre la génération du courant aléatoire IA. La figure 5 représente ainsi :
- un numéro de la phase P ;
- le signal d'horloge CLK ;
- le courant aléatoire IA ;
- une valeur d'amplitude AMP ; et
- une valeur de durée DUR.

Dans l'exemple de la figure 5, l'utilisateur a configuré le circuit 34 de manière à ce que :
- le paramètre AMP_MIN ait la valeur 2 ;
- le paramètre AMP_MAX ait la valeur 9 ;
- le paramètre DUR_MIN ait la valeur 2 ; et
- le paramètre DUR_MAX ait la valeur 7.

Dans l'exemple de la figure 5, le circuit 24 ne comprend pas le générateur 40 et le diviseur 42. Ainsi, le signal d'horloge CLK a une fréquence constante.

Les phases P correspondent à des durées de temps durant lesquelles la valeur du courant IA est constante. La durée DUR d'une phase P et la valeur AMP du courant IA durant ladite phase sont aléatoires. Plus précisément, au début de chaque phase P, une première valeur aléatoire est générée par le générateur 28 correspondant à la valeur d'amplitude AMP et une deuxième valeur aléatoire est générée par le générateur 28 correspondant à la valeur de durée DUR. Par exemple, le générateur 28 génère, au début de chaque phase P, une valeur aléatoire entre les paramètres AMP_MIN et AMP_MAX correspondant à la valeur d'amplitude AMP et une valeur aléatoire entre les paramètres DUR_MIN et DUR_MAX correspondant à la valeur de durée DUR. Alternativement, le générateur 28 peut générer deux valeurs aléatoires parmi une gamme fixe, ces deux valeurs étant en suite converties, par exemple par le bloc 32, dans les gammes définies par les paramètres AMP_MIN, AMP_MAX, DUR_MIN et DUR_MAX.

Ainsi, dans l'exemple de la figure 5, au début de la phase '0', la valeur d'amplitude AMP prend une valeur 2 et la valeur de durée DUR prend une valeur 5. Le courant IA prend ainsi une valeur égale à 2 fois un pas P1 d'amplitude pendant une durée égale à 5 fois un pas P2 de durée. Par exemple, le pas P1 est compris entre 0,1 mA et 10 mA. Par exemple, le pas P1 est égal à 1 mA. Ainsi, le courant IA a une valeur égale à 2 mA durant la phase '0'. Le pas P2 est par exemple égal à la période du signal d'horloge CLK. Ainsi, la phase '0' dure 5 cycles du signal d'horloge. Les pas P1 et P2 sont de préférence constants.

A la fin de la durée de la phase '0', la phase suivante '1' démarre et des nouvelles valeurs aléatoires sont générées de manière à obtenir des valeurs AMP et DUR pour la phase '1'. Les valeurs AMP et DUR sont, dans la phase '1', égales respectivement à 4 et 2.

De manière plus générale, au début de chaque phase, des valeurs aléatoires AMP et DUR sont obtenues et déterminent la durée de la phase à venir et la valeur du courant durant la phase à venir.

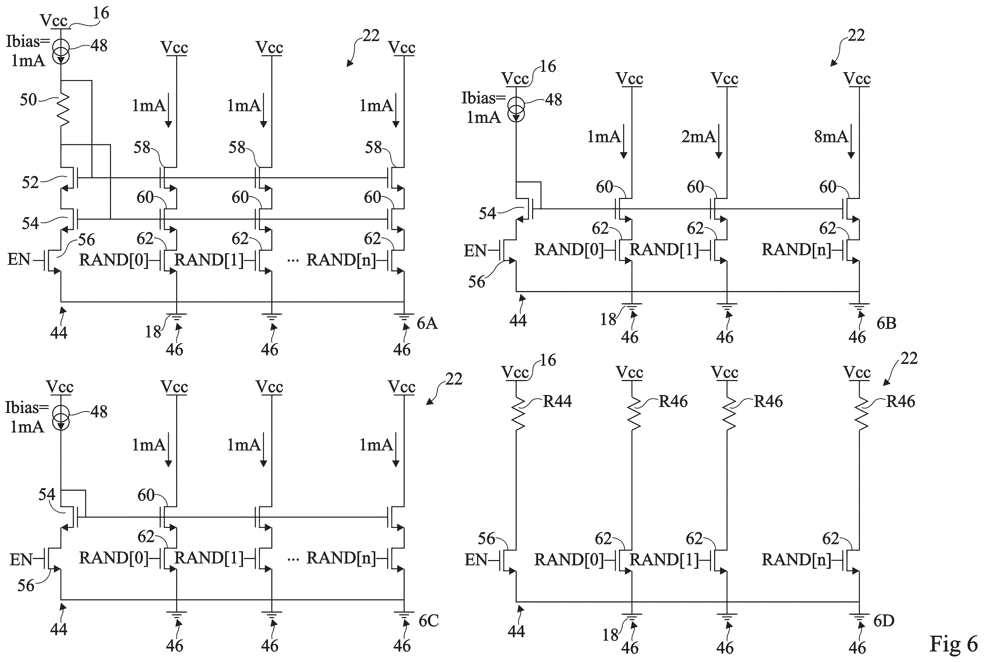

La figure 6 représente des exemples d'implémentation d'une partie du dispositif de la figure 4. Plus précisément, la figure 6 comprend quatre vues 6A, 6B, 6C et 6D, chaque vue illustrant un exemple d'implémentation de la source de courant variable 22 de la figure 4.

La vue 6A représente un exemple d'implémentation de la source de courant variable 22 de la figure 4. La source 22 de la vue 6A est configurée pour recevoir le paramètre EN et le signal RAND. Le signal RAND comprend, dans cet exemple, n+1 tensions de commande, la valeur n étant supérieure ou égale à 1.

La source 22 de la vue 6A comprend une branche 44 et n+1 branches 46. La branche 44 comprend, reliés entre le noeud 16 et le noeud 18, de préférence dans cet ordre :
- une source 48 d'un courant Ibias ;
- une résistance 48 ;
- un transistor 52 ;
- un transistor 54 ; et
- un interrupteur 56, par exemple un transistor.

Le courant Ibias a de préférence une valeur égale au pas P1. Dans l'exemple de la vue 6A, le courant Ibias a une valeur égale à 1 mA. Le courant Ibias a une valeur inférieure ou égale à la valeur la plus basse possible du courant IA. Le courant Ibias a de préférence une valeur sensiblement constante.

Les transistors 52, 54, 56 sont par exemple des transistors à effet de champ à grille isolée (Metal Oxide Semiconductor Field Effect Transistor) ou MOSFET. Par exemple, les transistors 52, 54, 56 sont des transistors à canal N.

La source 48 comprend une borne reliée, de préférence connectée, au noeud 16 et une borne reliée, de préférence connectée, à une borne de la résistance 50. L'autre borne de la résistance 50 est reliée, de préférence connectée, à une borne de conduction du transistor 52, par exemple le drain. L'autre borne de conduction du transistor 52, par exemple la source, est reliée, de préférence connectée, à une borne de conduction du transistor 54, par exemple le drain. L'autre borne de conduction du transistor 54, par exemple la source, est reliée, de préférence connectée, à une borne de conduction du transistor 56, par exemple le drain. L'autre borne de conduction du transistor 56, par exemple la source, est reliée, de préférence connectée, au noeud 18. Le point milieu de la source 48 et de la résistance 50 est en outre relié, de préférence connecté, à la borne de commande, par exemple la grille, du transistor 52. Le point milieu de la résistance 50 et du transistor 52 est en outre relié, de préférence connecté, à la borne de commande, par exemple la grille, du transistor 54. La borne de commande du transistor 56 est configuré pour être commandé selon le signal EN**.** Ainsi, lorsque le signal EN prend la valeur indiquant que la contremesure est activée, le transistor 26 est passant et lorsque le signal EN prend la valeur indiquant que la contremesure est désactivée, le transistor 26 est bloqué.

Chaque branche 46 comprend, reliés entre le noeud 16 et le noeud 18, de préférence dans cet ordre, un transistor 58, un transistor 60, et un interrupteur 62, par exemple un transistor.

Les transistors 58, 60, 62 sont par exemple des transistors à effet de champ à grille isolée (Metal Oxide Semiconductor Field Effect Transistor) ou MOSFET. Par exemple, les transistors 58, 60, 62 sont des transistors à canal N.

Une borne de conduction du transistor 58, par exemple le drain, est reliée, de préférence connectée, au noeud 16. L'autre borne de conduction du transistor 58, par exemple la source, est reliée, de préférence connectée, à une borne de conduction du transistor 60, par exemple le drain. L'autre borne de conduction du transistor 60, par exemple la source, est reliée, de préférence connectée, à une borne de conduction du transistor 62, par exemple le drain. L'autre borne de conduction du transistor 60, par exemple la source, est reliée, de préférence connectée, au noeud 18.

Les bornes de commande, par exemple des grilles, des transistors 58 de toutes les branches 46 sont reliées, de préférence connectées, ensemble et à la borne de commande du transistor 52. Similairement, les bornes de commande, par exemple des grilles, des transistors 60 de toutes les branches 46 sont reliées, de préférence connectées, ensemble et à la borne de commande du transistor 54. La borne de commande de chaque transistor 62 est configurée pour recevoir une tension de commande du signal RAND, de préférence distinctes des tensions de commande reçues par les autres bornes de commande des transistors 62.

Chaque branche 46 forme ainsi un miroir de courant avec la branche 44.

Les transistors 52 et 58 sont de préférence tous identiques. Les transistors 54 et 60 sont de préférence tous identiques. Les transistors 58 et 60 sont de préférence tous identiques. Ainsi, chaque branche 46 est traversée par un courant sensiblement égal au pas P1.

Lors du fonctionnement de la contremesure, le signal RAND est tel qu'il y ait autant de transistors 62 passant que la valeur du nombre AMP.

La vue 6B représente un autre exemple d'implémentation de la source de courant variable 22 de la figure 4. La source 22 de la vue 6B comprend des éléments de la source 22 de la vue 6A, en particulier :
- une branche 44 comprenant la source 48, le transistor 54 et le transistor 56 reliés entre l'alimentation 16 et la masse 18 ; et
- des branches 46 comprenant des transistors 60 et 62 reliés entre l'alimentation 16 et la masse 18.

La branche 44 de la vue 6B diffère de la branche 44 de la vue 6A en ce que la branche 44 de la vue 6B ne comprend pas la résistance 50 et le transistor 52. La borne de commande du transistor 54 est alors reliée, de préférence connectée, au point milieu du transistor 54 et de la source 48.

Les branches 46 de la vue 6B diffèrent des branches 46 de la vue 6A en ce que chaque branche 46 de la vue 6B ne comprend pas le transistor 58. En outre, les transistors 60 ont des tailles différentes de telle manière que les courants traversants les différentes branches 46 aient des valeurs différentes. De préférence, la source 22 comprend autant de branche que de valeur d'amplitude possible pour le courant IA. Ainsi, lors du fonctionnement de la contremesure, le signal RAND est tel que le transistor 62 correspondant à la valeur de courant IA voulue est passante et les autres transistors 62 sont bloqués.

La vue 6C représente un autre exemple d'implémentation de la source de courant variable 22 de la figure 4. La source 22 de la vue 6C comprend les éléments de la source 22 de la vue 6B. La source 22 de la vue 6C diffère de la source de la vue 6B en ce que tous les transistors 60 sont identiques. Le fonctionnement de la source 22 de la vue 6C est alors identique au fonctionnement de la source 22 de la vue 6A.

La vue 6D représente un autre exemple d'implémentation de la source de courant variable 22 de la figure 4. La source 22 de la vue 6D comprend des éléments de la source 22 de la vue 6A, en particulier :
- la branche 44 comprend le transistor 56 commandé par le signal EN ; et
- chaque branche 46 comprend le transistor 62 commandé par une tension de commande du signal RAND.

La source 22 de la vue 6D diffère de la source de la vue 6A en ce que chaque branche 44, 46 comprend une résistance R44, R46. Ainsi, le transistor 56 est relié en série avec la résistance R44 entre l'alimentation 16 et la masse 18. Une borne de la résistance R44 est reliée, de préférence connectée, à l'alimentation 16 et l'autre borne de la résistance R44 est reliée, de préférence connectée, à une borne de conduction, par exemple le drain, du transistor 56. L'autre borne de conduction, par exemple la source, du transistor 56 est reliée, de préférence connectée, à la masse 18. Similairement, le transistor 62 de chaque branche 46 est relié en série avec la résistance R46 de cette branche 46 entre l'alimentation 16 et la masse 18. Une borne de la résistance R46 est reliée, de préférence connectée, à l'alimentation 16 et l'autre borne de la résistance R46 est reliée, de préférence connectée, à une borne de conduction, par exemple le drain, du transistor 62. L'autre borne de conduction, par exemple la source, du transistor 62 est reliée, de préférence connectée, à la masse 18.

Lors du fonctionnement de la source 22, le signal RAND est choisi de telle manière que la résistance totale des branches 44, 46 dont le transistor 56, 62 est passant permette d'obtenir un courant IA telle que désiré.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Dispositif électronique (14) comprenant une première source (22) d'un courant aléatoire (IA) reliée entre l'alimentation (16) et la masse (18) du dispositif.

2. Procédé de commande d'un dispositif électronique (14) comprenant l'application d'un courant aléatoire (IA) par une première source de courant (22) entre l'alimentation (16) et la masse (18) du dispositif.

3. Dispositif selon la revendication 1 ou procédé selon la revendication 2, dans lequel la première source (22) du courant aléatoire (IA) est connectée à la masse (18).

4. Dispositif selon la revendication 1 ou 3 ou procédé selon la revendication 2 ou 3, dans lequel la première source (22) est une source de courant variable commandée par un signal de commande (RAND) obtenu à partir d'au moins un nombre aléatoire.

5. Dispositif ou procédé selon la revendication 4, dans lequel le signal de commande (RAND) est configuré pour assurer que le courant aléatoire (IA) prend une succession de valeurs (AMP) aléatoires.

6. Dispositif ou procédé selon la revendication 5, dans lequel chaque valeur aléatoire (AMP) est maintenue pendant une durée aléatoire (DUR).

7. Dispositif ou procédé selon la revendication 6, dans lequel les valeurs aléatoires (AMP) sont chacune égale à la multiplication d'un premier nombre aléatoire et d'un premier pas (P1), les durées aléatoires étant chacune égale à la multiplication d'un deuxième nombre aléatoire et d'un deuxième pas (P2).

8. Dispositif ou procédé selon la revendication 7, dans lequel le dispositif comprend un générateur (28) de valeurs aléatoires configuré pour générer les premières et deuxièmes nombres aléatoires.

9. Dispositif ou procédé selon l'une quelconque des revendications 6 à 8, dans lequel les durées (DUR) de maintien des valeurs aléatoires du courant sont comprises dans une première gamme paramétrable.

10. Dispositif ou procédé selon l'une quelconque des revendications 5 à 9, dans lequel les valeurs aléatoires (AMP) du courant aléatoire (IA) sont comprises dans une deuxième gamme paramétrable.

11. Dispositif ou procédé selon l'une quelconque des revendications 4 à 10, dans lequel la première source (22) du courant aléatoire (IA) comprend :
- une première branche (44) entre l'alimentation (16) et la masse (18) du dispositif, la première branche (44) comprenant un premier interrupteur (56) commandé par un signal d'activation (EN), un premier transistor (54) et une deuxième source (48) d'un deuxième courant (Ibias) ; et
- au moins deux deuxièmes branches (46) entre l'alimentation (16) et la masse (18) du dispositif, chaque deuxième branche (46) comprenant un deuxième interrupteur (62) et un deuxième transistor (60) couplé en miroir de courant avec le premier transistor (54), chaque deuxième interrupteur (62) étant commandé par une partie du signal de commande (RAND).

12. Dispositif ou procédé selon les revendications 7 et 11, dans lequel le deuxième courant (Ibias) est égal au premier pas (P1).

13. Dispositif ou procédé selon l'une quelconque des revendications 4 à 10, dans lequel la source de courant comprend :
- une première branche (44) entre l'alimentation (16) et la masse (18) du dispositif, la première branche (44) comprenant un premier interrupteur (56) commandé par un signal d'activation (EN) et une première résistance (R44) ; et
- au moins deux deuxièmes branches (46) entre l'alimentation (16) et la masse (18) du dispositif, chaque deuxième branche (46) comprenant un deuxième interrupteur (62) et une deuxième résistance (R46), chaque deuxième interrupteur (62) étant commandé par une partie du signal de commande (RAND).

14. Dispositif ou procédé selon l'une quelconque des revendications qui précèdent, dans lequel l'alimentation (16) est une broche d'entrée/sortie configurée pour être reliée à une source d'alimentation externe au dispositif (14).
